# EUROPÄISCHE PATENTSCHRIFT

(11) **EP 3 170 652 B1**
(45) Veröffentlichungstag und Bekanntmachung des Hinweises auf die Patenterteilung: **21.03.2018**
(21) Anmeldenummer: 16197876.2
(22) Anmeldetag: 09.11.2016
(51) Int. Cl.: B29D 11/00

(54) **VERFAHREN ZUM HERSTELLEN UND BESCHICHTEN EINER LINSE**
METHOD FOR PRODUCING AND COATING A LENS
PROCÉDÉ DE FABRICATION ET DE REVÊTEMENT DE LENTILLE

(30) Priorität: 19.11.2015 CH 16882015
(43) Veröffentlichungstag der Anmeldung: 24.05.2017
(73) Patentinhaber: Interglass Technology AG, 6330 Cham (CH)
(72) Erfinder: ULRICH, Rene Josef, 6353 Weggis (CH); PIOTROWSKI, Daniel, 6312 Steinhausen (CH)
(74) Vertreter: Falk, Urs

(56) Entgegenhaltungen:
- US-A- 4 166 088
- US-A1- 2007 229 756
- US-A1- 2007 252 294

## Beschreibung

### Technisches Gebiet

Die Erfindung betrifft ein Verfahren zum Herstellen und Beschichten einer Linse, bei dem die Linse durch Giessen hergestellt und anschliessend in einer Vakuumbeschichtungsanlage beschichtet wird.

Eine solche Linse ist ein Halbfabrikat, aus dem später beispielsweise von einem Optiker ein Brillenglas herausgeschnitten und in ein Brillengestell eingepasst wird.

### Hintergrund der Erfindung

Verfahren zur Herstellung einer Linse durch Giessen sind beispielsweise bekannt aus EP 15202 und WO 02/087861. Bei dieser Herstellungsmethode wird ein Monomer in eine durch zwei Formschalen und eine Dichtung begrenzte Kavität gegossen und polymerisiert, wobei die Linse entsteht. Die Dichtung wird dann entfernt und die Linse von den beiden Formschalen getrennt. Die Linse kann dann in Tauchbädern oder in einer Vakuumbeschichtungsanlage, beispielsweise einer PECVD Anlage, mit optischen Schichten versehen werden, z.B. mit Antireflexionsschichten, einer Kratzschutzschicht, etc. US2007/0229756 offenbart ein Verfahren , bei dem ein Schutzring auf die vorgeformte Linse geformt werden kann.

Die gegossenen Linsen haben entlang ihres Umfangs meistens einen abstehenden Vorsprung, der spröde ist und deshalb leicht beschädigt werden kann. Damit abgespaltene Splitter bei der nachfolgenden Beschichtung mittels eines Prozesses, bei dem die Schichten in einer Vakuumbeschichtungsanlage aufgetragen werden, nicht auf die optische Fläche der Linse gelangen, müssen die Linsen vor dem Platzieren in der Vakuumkammer der Beschichtungsanlage in einem oder mehreren Waschprozessen gereinigt werden.

### Kurze Beschreibung der Erfindung

Der Erfindung liegt die Aufgabe zugrunde, die Herstellung und Beschichtung von Linsen zu verbessern.

Die genannte Aufgabe wird erfindungsgemäss gelöst durch die Merkmale des Anspruchs 1. Vorteilhafte Ausgestaltungen ergeben sich aus den abhängigen Ansprüchen.

Erfindungsgemäss umfasst das Verfahren zum Herstellen und Beschichten einer Linse folgende Schritte:
Aufbringen einer aushärtbaren Paste entlang des Randes einer ersten Formschale und entlang des Randes einer zweiten Formschale,
Verbinden der beiden Formschalen mittels eines Dichtungselementes zu einem Verbund,
Giessen eines Monomers in den Verbund,
Aushärten des Monomers und der Paste, so dass die Linse gebildet wird,
Ablösen des Dichtungselementes von dem Verbund,
Trennen der Linse von den beiden Formschalen,
Platzieren der Linse in einer Vakuumkammer einer Vakuumbeschichtungsanlage, und
Beschichten einer optischen Fläche der Linse, wobei zwischen dem Schritt des Trennens der Linse von den beiden Formschalen und dem Schritt des Platzierens der Linse in der Vakuumkammer kein Waschvorgang durchgeführt wird.

Bevorzugt erfüllt die Paste folgende Kriterien: Die Paste aus einem Material besteht, das eine ausreichend hohe Viskosität hat, damit die auf die Formschalen aufgetragene Paste nicht verfliesst, das nicht ausgast und das sich beim Aushärten mit dem Monomer bzw. der Linse verbindet und im ausgehärteten Zustand gummiartig ist.

### Kurze Beschreibung der Figuren

Die beigefügten Zeichnungen, die in diese Beschreibung aufgenommen sind und einen Teil dieser Beschreibung bilden, veranschaulichen eine oder mehrere Ausführungsformen der vorliegenden Erfindung und dienen zusammen mit der detaillierten Beschreibung dazu, die Prinzipien und Implementierungen der Erfindung zu erläutern. Aus Gründen der Übersichtlichkeit sind die Figuren nicht massstäblich gezeichnet.
- Fig. 1: zeigt zwei einander gegenüberliegende Formschalen, die mittels eines Dichtungselementes zu einem Verbund verbunden sind,
- Fig. 2: zeigt einen Ausschnitt der Fig. 1 vergrössert,
- Fig. 3: zeigt eine Formschale mit einer Fase,
- Fig. 4: zeigt eine Linse,
- Fig. 5: zeigt einen Ausschnitt der Fig. 4 vergrössert,
- Fig. 6: zeigt in Aufsicht eine Formschale, entlang deren Randes eine Paste aufgetragen ist,
- Fig. 7: zeigt den Verbund im Querschnitt, und
- Fig. 8: zeigt einen Ausschnitt der mit dem erfindungsgemässen Verfahren hergestellten Linse.

### Detaillierte Beschreibung der Erfindung

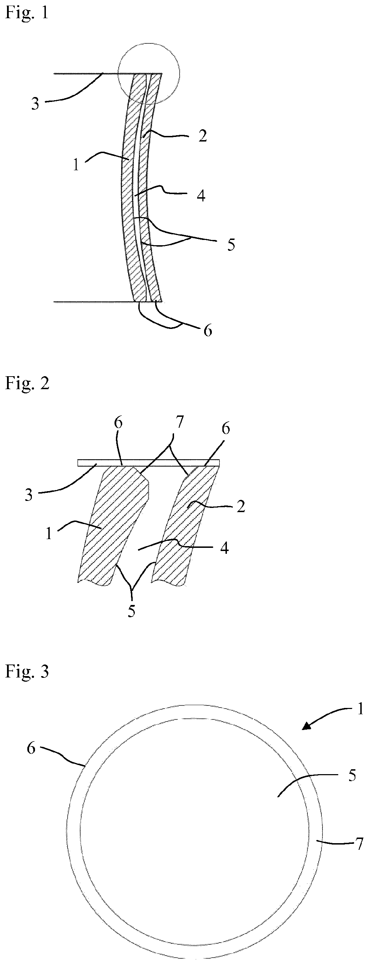

Die Fig. 1 zeigt zwei einander gegenüberliegende Formschalen 1 und 2, die mittels eines Dichtungselementes 3 zu einem Verbund verbunden sind. Das Dichtungselement 3 ist vorzugsweise ein Tape. Das Dichtungselement 3 kann aber auch ein im Fachjargon als "gasket" bekanntes Element sein, das aus Gummi oder gummiähnlichem Material besteht. Die beiden Formschalen 1 und 2 und das Dichtungselement 3 begrenzen einen Hohlraum 4. Die beiden Formschalen 1 und 2 enthalten eine dem Hohlraum 4 zugewandte Fläche, die im folgenden als optische Fläche 5 bezeichnet wird, weil diese beiden Flächen 5 die Oberflächen der herzustellenden Linse begrenzen. Die Fig. 2 zeigt den durch einen Kreis dargestellten Ausschnitt der Fig. 1 vergrössert. Darin ist ersichtlich, dass der Übergang von den Seitenkanten 6 zu den optischen Flächen 5 bei den beiden Formschalen 1 und 2 mit einer Fase 7 ausgebildet ist. Der Übergang ist also abgekantet. Die Fig. 3 zeigt die dem Hohlraum 4 zugewandte Fläche 5 der Formschale 1, wobei die Fase 7 aus Gründen der zeichnerischen Klarheit verbreitert dargestellt ist.

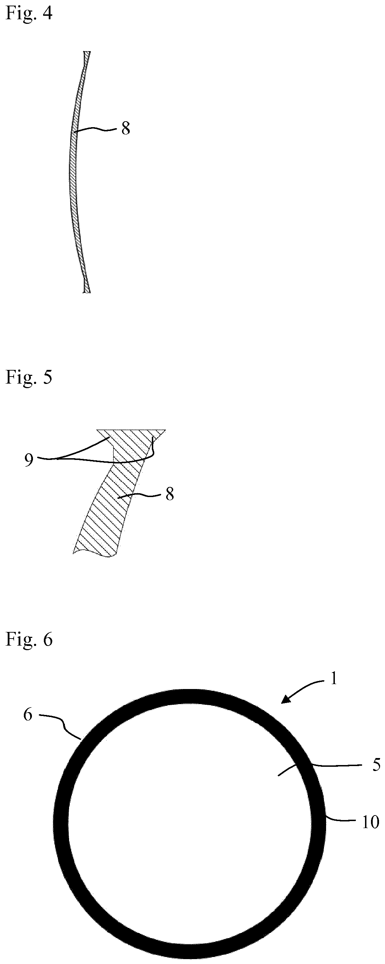

Die mit einem solchen Verbund hergestellte Linse 8 enthält - wie in der Fig. 4 gezeigt ist - entlang ihres Randes auf beiden Seiten je einen den Fasen 7 der Formschalen 1 und 2 entsprechenden Vorsprung. Die Fig. 5 zeigt einen vergrösserten Ausschnitt der Fig. 4. Da das ausgehärtete Material, aus dem die Linse 8 besteht, relativ spröde ist, brechen bei den nachfolgenden Bearbeitungsschritten immer wieder Splitter von den Vorsprüngen 9 ab. Die Linse 8 muss deshalb vor dem Beschichten mittels eines Vakuumbeschichtungsverfahrens, bei dem die Schicht oder Schichten in einer Vakuumkammer aufgetragen wird/werden, sorgfältig gewaschen werden, um allfällige Splitter zu entfernen.

Das nachfolgend im Detail beschriebene erfindungsgemässe Verfahren ergibt eine Linse, die zwar einen solchen Vorsprung hat, jedoch besteht dieser Vorsprung aus einem gummiartigen, und damit nicht spröden Material, so dass keine Gefahr besteht, dass Splitter abbrechen. Aus diesem Grund kann auf einen oder mehrere Waschprozesse vor dem Einführen der Linse in die Vakuumkammer der Beschichtungsanlage verzichtet werden.

Das erfindungsgemässe Verfahren zum Herstellen einer Linse durch Giessen und Beschichten der Linse mittels eines Vakuumbeschichtungsverfahrens umfasst folgende Schritte:
1. Aufbringen einer aushärtbaren Paste 10 entlang des Randes der ersten Formschale 1 und entlang des Randes der zweiten Formschale 2.
   Die Fig. 6 zeigt in Aufsicht und in nicht massstäblicher Darstellung die erste Formschale 1 mit der aufgetragenen Paste 10, wobei die Paste 10 aus Gründen der zeichnerischen Klarheit verbreitert dargestellt ist. Die Paste 10 befindet sich an der Übergangsstelle zwischen der optischen Fläche 5 und der Seitenkante 6, d.h. auf der Fase 7 (Fig. 2). Die Paste 10 wird beispielsweise aufgebracht, in dem die Formschale 1 rotiert und die Paste 10 mittels einer mit Druck beaufschlagbaren Spritze abgegeben wird. Die Paste 10 kann bei Bedarf mittels eines Rakels so verstrichen werden, dass die Paste 10 die Fase 7 vollständig bedeckt.
2. Verbinden der beiden Formschalen 1 und 2 mittels des Dichtungselementes 3 zu einem Verbund.

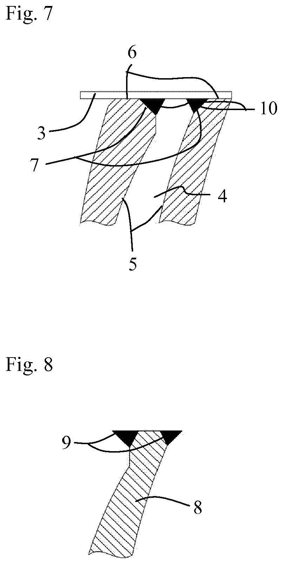

   Die Fig. 7 zeigt einen vergrösserten Ausschnitt des Verbunds im Querschnitt. Die Paste 10 ist so bemessen und verteilt, dass das Monomer beim Eingiessen die Paste 10 nicht hinterfliessen kann.
3. Giessen des Monomers in den Verbund.
4. Aushärten des Monomers und der Paste 10.
   Das Aushärten ist ein Prozess, bei dem das Monomer polymerisiert, wobei sich die Linse 8 bildet. Die Paste 10 besteht vorzugsweise aus einem Material, das aushärtet, wenn das Monomer polymerisiert wird. Das Aushärten des Monomers und der Paste 10 können in diesem Fall in einem einzigen Schritt erfolgen. Alternativ ist es möglich, in zwei Schritten zuerst die Paste 10 und dann das Monomer, oder umgekehrt, auszuhärten. Das Aushärten von Monomer und Paste 10 erfolgt vorzugsweise mittels UV Strahlung, kann aber auch auf andere Weise erfolgen, beispielsweise durch Wärme in einem Ofen.
5. Ablösen des Dichtungselementes 3 von dem Verbund.
6. Trennen der Linse 8 von den beiden Formschalen 1 und 2.
   Die Linse 8 hat, entsprechend der Fasen 7 der beiden Formschalen 1 und 2, entlang ihrer Seitenkante 6 die zwei abstehenden Vorsprünge 9, wie dies in der Fig. 8 gezeigt ist. Die zwei Vorsprünge 9 bestehen jedoch aus dem ausgehärteten Material der Paste 10.
7. Platzieren der Linse 8 in der Vakuumkammer einer Vakuumbeschichtungsanlage, und
8. Auftragen einer oder mehreren Schichten auf zumindest eine der beiden optischen Flächen der Linse 8,
   wobei zwischen dem Schritt des Trennens der Linse 8 von den beiden Formschalen 1 und 2 und dem Schritt des Platzierens der Linse 8 in der Vakuumkammer kein Waschvorgang durchgeführt wird.

Mögliche Vakuumbeschichtungsverfahren sind CVD (chemical vapor deposition) Verfahren, insbesondere das PECVD (plasma-enhanced chemical vapor deposition) Verfahren und das PACVD (plasma-assisted chemical vapor deposition) Verfahren, sowie auch verschiedene PVD (physical vapor deposition) Verfahren, darunter beispielsweise sputtering, electron beam evaporation, sowie das pulsed laser deposition (PLD) Verfahren. Diese Liste ist nicht abschliessend.

Die Paste 10 besteht aus einem Material, das folgende Anforderungen erfüllt:
- Es ist aushärtbar.
- Es hat eine ausreichend hohe Viskosität, damit die auf die Fase 7 aufgetragene Paste 10 nicht verfliesst,
- Es gast nicht aus, damit sich kein Nebel bilden kann, der sich auf den Formschalen 1 und 2 niederschlagen könnte, was zu optischen Defekten der Linse 8 führen würde.
- Es verbindet sich beim Aushärten mit dem Monomer bzw. der Linse 8, so dass es sich beim Trennen der Linse 8 von den beiden Formschalen 1 und 2 zusammen mit der Linse 8 von den Formschalen 1 und 2 löst.
- Es ist im ausgehärteten Zustand gummiartig.

Materialien, die diese Anforderungen erfüllen, werden beispielsweise von der Firma Dymax unter dem Handelsnamen "Speedmask" vertrieben. Diese Materialien sind "light curable temporary masking resins".

Die Vorsprünge 9 der mit diesem Verfahren hergestellten Linse 8 sind gummiartig. Damit besteht keine Gefahr, dass Splitter abbrechen.

Während Ausführungsformen und Anwendungen dieser Erfindung gezeigt und beschrieben wurden, ist es für Fachleute, die den Vorteil dieser Offenbarung haben, offensichtlich, dass viele weitere Modifikationen als oben erwähnt möglich sind, ohne von dem hierin erläuterten erfinderischen Konzept abzuweichen. Die Erfindung ist daher nur durch die Ansprüche beschränkt.

## Patentansprüche

1. Verfahren zum Herstellen und Beschichten einer Linse, das folgende Schritte umfasst:
Aufbringen einer aushärtbaren Paste (10) entlang des Randes einer ersten Formschale (1) und entlang des Randes einer zweiten Formschale (2),
Verbinden der beiden Formschalen (1, 2) mittels eines Dichtungselementes (3) zu einem Verbund,
Giessen eines Monomers in den Verbund,
Aushärten des Monomers und der Paste (10), so dass die Linse (8) gebildet wird,
Ablösen des Dichtungselementes (3) von dem Verbund,
Trennen der Linse (8) von den beiden Formschalen (1,2),
Platzieren der Linse (8) in einer Vakuumkammer einer Vakuumbeschichtungsanlage, und
Beschichten einer optischen Fläche der Linse (8), wobei zwischen dem Schritt des Trennens der Linse (8) von den beiden Formschalen (1, 2) und dem Schritt des Platzierens der Linse (8) in der Vakuumkammer kein Waschvorgang durchgeführt wird.

2. Verfahren nach Anspruch 1, **dadurch gekennzeichnet, dass** die Paste (10) aus einem Material besteht, das eine ausreichend hohe Viskosität hat, damit die auf die Formschalen (1, 2) aufgetragene Paste (10) nicht verfliesst, das nicht ausgast und das sich beim Aushärten mit dem Monomer bzw. der Linse (8) verbindet und im ausgehärteten Zustand gummiartig ist.

## Claims

1. Method for producing and coating a lens, comprising the following steps:
applying a curable paste (10) along the edge of a first moulding shell (1) and along the edge of a second moulding shell (2),
connecting the two moulding shells (1, 2) by means of a sealing element (3) to a unit,
casting a monomer into the unit,
curing the monomer and the paste (10) so that the lens (8) is formed,
detaching the sealing element (3) from the unit,
separating the lens (8) from the two moulding shells (1, 2),
placing the lens (8) in a vacuum chamber of a vacuum-coating installation, and
coating an optical surface of the lens (8), wherein no washing process is carried out between the step of separating the lens (8) from the two moulding shells (1, 2) and the step of placing the lens (8) in the vacuum chamber.

2. Method according to claim 1, wherein the paste (10) consists of a material which has a sufficiently high viscosity so that the paste (10) applied to the moulding shells (1,2) does not trail away, does not gas out and connects to the monomer or the lens (8) during curing and is rubber-like in the cured state.

## Revendications

1. Procédé de fabrication et de revêtement d'une lentille, comprenant les étapes suivantes:
appliquer une pâte durcissable (10) le long du bord d'une première coque de moulage (1) et le long du bord d'une seconde coque de moulage (2),
lier les deux coques de moulage (1, 2) au moyen d'un élément d'étanchéité (3) en une composite,
couler un monomère dans la composite,
durcir le monomère et la pâte (10) pour que la lentille (8) est formée,
détacher l'élément d'étanchéité (3) de la composite,
séparer la lentille (8) des deux coques de moulage (1, 2),
placer la lentille (8) dans une chambre à vide d'une installation de revêtement sous vide,
et
revêter une surface optique de la lentille (8), dans lequel aucun processus de lavage n'est effectué entre l'étape consistant à séparer la lentille (8) des deux coques de moulage (1, 2) et l'étape consistant à placer la lentille (8) dans la chambre à vide.

2. Procédé selon la revendication 1, dans lequel la pâte (10) est constituée d'un matériau qui présente une viscosité suffisamment élevée pour que la pâte (10) appliquée sur les coques de moulage (1, 2) ne s'éstompe pas, ne dégaze pas et se lie au monomère ou à la lentille (8) pendant le durcissement et est caoutchouteuse à l'état durci.
